# EUROPÄISCHE PATENTSCHRIFT

(11) **EP 1 722 997 B1**
(45) Veröffentlichungstag und Bekanntmachung des Hinweises auf die Patenterteilung: **06.06.2018**
(21) Anmeldenummer: 05706756.3
(22) Anmeldetag: 05.02.2005
(51) Int. Cl.: B60L 13/04, H01F 27/32

(54) **MAGNETPOL FÜR MAGNETSCHWEBEFAHRZEUG**
MAGNETIC POLE FOR MAGNETIC LEVITATION VEHICLES
POLE MAGNETIQUE POUR VEHICULE A SUSTENTATION MAGNETIQUE

(30) Priorität: 09.03.2004 DE 102004011942
(43) Veröffentlichungstag der Anmeldung: 22.11.2006
(73) Patentinhaber: ThyssenKrupp Transrapid GmbH, 34127 Kassel (DE)
(72) Erfinder: HAHN, Wolfgang, 34125 Kassel (DE); PFANNKUCH, Harald, 34590 Wabern (DE)
(74) Vertreter: Lorenz, Bernd Ingo Thaddeus
(86) Internationale Anmeldenummer: PCT/DE2005/000219
(87) Internationale Veröffentlichungsnummer: WO 2005/087534

(56) Entgegenhaltungen:
- DE-A- 2 442 388
- JP-A- 06 290 933
- JP-A- H05 234 741
- JP-A- H11 196 546
- JP-A- 2004 040 036
- US-A- 3 467 931

## Beschreibung

Die Erfindung betrifft einen Magnetpol gemäß der im Oberbegriff der Ansprüche 1 und 3 angegebenen Gattung.

Magnetpole mit einem eine Mittelachse aufweisenden Kern und einer auf den Kern aufgebrachten Wicklung werden bei Magnetschwebefahrzeugen in vielfältiger Form eingesetzt, z. B. als Teile von Trag-, Führ- oder Bremsmagneten. Bisher werden diese Magnetpole aus einem Eisenkern und einer auf diesem aufgebrachten Wicklung hergestellt, die aus abwechselnd aufeinander folgenden Lagen eines Leiters und eines Isolators gebildet ist (PCT WO 97/30 504). Die Leiter und Isolatoren bestehen dabei aus bandförmigen Materialien, z. B. Aluminiumbändern und dünnen Isolierfolien.

Die bekannten Magnetpole bestehen aus je einer Scheibe, so daß die Lagenzahl gleich der Windungszahl ist. Dadurch ergibt sich bei hoher Windungszahl ein Kühlproblem. Wenn der Kern gleichzeitig als Kühlkörper wirken soll, muß die in den einzelnen Lagen erzeugte Wärme in radialer Richtung auch die elektrisch gewünschten, thermisch jedoch störenden Isolierfolien durchdringen, deren thermischer Gesamtwiderstand mit zunehmender Anzahl der Lagen stetig zunimmt.

Aus der DE 24 42 388 A1 ist ein gattungsgemäßer Magnetpol für Magnetschwebefahrzeuge mit einem eine Mittelachse aufweisenden Kern und eine auf den Kern aufgebrachten Wicklung bekannt, wobei die Wicklung in Richtung der Mittelachse beabstandete Scheiben enthält. Die Aufteilung in zwei Scheiben ist vorgesehen, um eine verbesserte Kühlung zu erreichen. Entsprechend sind die beiden Scheiben parallel zueinander verschachtelt, so daß sich bezüglich der Anzahl der in radialer Richtung aufeinander folgenden Wicklungen und der Form des Magnetpols keine wesentlichen Unterschiede gegenüber der zuvor beschriebenen Ausgestaltung mit lediglich einer Scheibe ergibt.

In einer parallelen Patentanmeldung derselben Anmelderin wird daher vorgeschlagen, die Wicklung mit wenigstens zwei Scheiben zu versehen, die aus in mehreren Lagen um den Kern gewickelten Leitungsbändern gebildet sind, und die einzelnen Lagen radial, die beiden Scheiben dagegen axial elektrisch gegeneinander zu isolieren. Außerdem wird dort vorgeschlagen, die Leitungsbänder mit entgegengesetztem Wicklungssinn um den Kern zu wickeln und am Kern elektrisch miteinander zu verbinden. Dadurch ergibt sich der Vorteil, daß der Magnetpol nicht mit bis nach innen durchgeführten, zwischen dem Kern und der ersten Lage endenden, elektrischen Anschlüssen versehen werden braucht. Noch nicht gelöst ist allerdings die Frage, wie die beiden dem Kern nahen Lagen kostengünstig mit Hilfe von elektrischen Verbindungsmitteln verbindbar sind, ohne daß durch diese scharfe Kanten und Ecken entstehen, die Isolationsdurchbrüche durch Spitzenentladungen zur Folge habe können. Es wäre zwar möglich, zwischen dem Kern und der jeweils ersten Lage der beiden Scheiben eine ausreichend dicke Isolierschicht vorzusehen, die den in der Regel auf Massepotential befindlichen Kern gegen diese ersten Lagen und die dort vorgesehenen Verbindungsmittel elektrisch abschirmt. Dies wäre jedoch mit dem Nachteil verbunden, daß die thermische Leitfähigkeit in radialer Richtung in diesem Bereich erheblich verschlechtert würde, was sich ungünstig auf die Abfuhr der in der Wicklung erzeugten Wärmeenergie über den auch als Kühlkörper wirkenden Kern und damit auf die Kühlleistung auswirken würde.

Der Erfindung liegt daher das technische Problem zugrunde, den Magnetpol der eingangs bezeichneten Gattung so auszubilden, daß er sowohl kostengünstig herstellbar ist als auch ohne aufwendige Isolierungsmaßnahmen gegen störende Feldstärkeverdichtungen betrieben werden kann.

Zur Lösung dieses Problems dienen die kennzeichnenden Merkmale der Ansprüche 1 und 3.

Die Erfindung bringt den Vorteil mit sich, daß die Wicklung für beide Scheiben aus einem komplett vorgefertigten, dem elektrischen Verbindungsabschnitt bereits aufweisenden Leiterband hergestellt werden kann. Der im Einzelfall gewünschte axiale Abstand der beiden Scheiben wird dabei durch die Geometrie des Verbindungsabschnitts festgelegt. Dasselbe gilt für den entgegengesetzten Wicklungssinn der beiden angrenzenden Leitungsbandabschnitte, so daß beim Bewickeln praktisch keine Fehler auftreten können.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 in perspektivischer Darstellung die Bewicklung eines üblichen, eine Wicklung mit einer Scheibe aufweisenden Magnetpols;
Fig. 2 schematisch einen Schnitt längs der Linie II - II der Fig. 1 durch eine Hälfte eines erfindungsgemäß ausgebildeten Magnetpols mit einer zwei Scheiben aufweisenden Wicklung;
Fig. 3 die Draufsicht auf ein erstes Ausführungsbeispiel eines erfindungsgemäßen Leitungsbandes in einem ungefalteten Zustand;
Fig. 4 die Draufsicht auf das Leitungsband nach Fig. 3 in einem erfindungsgemäß gefalteten Zustand;
Fig. 5 die Draufsicht auf einen Mittelabschnitt eines zweiten Ausführungsbeispiels des erfindungsgemäßen Leitungsbandes;
Fig. 6 die Draufsicht auf ein der Fig. 5 im wesentlichen entsprechendes Leitungsband, das jedoch mit besonders zugeschnittenen Leitungsbandabschnitten versehen ist; und
Fig. 7 eine der Fig. 2 entsprechende Schnittansicht des Magnetpols bei Anwendung des Leitungsbandes nach Fig. 6.

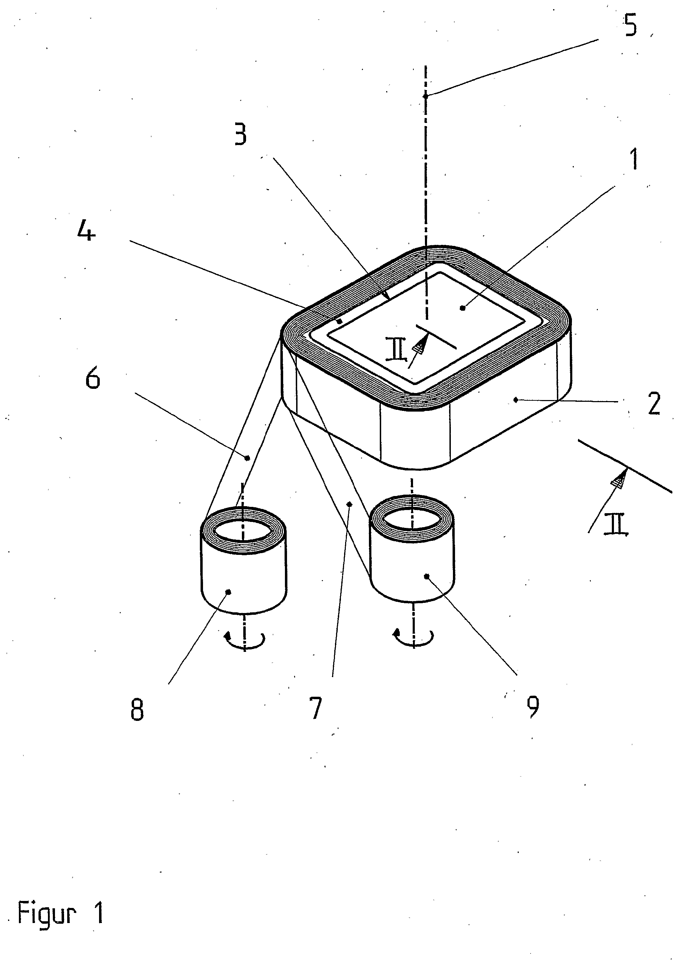

Ein Magnetpol der hier interessierenden Art enthält nach Fig. 1 einen aus einem Blechpaket bestehenden, vorzugsweise quaderförmigen Eisenkern 1 mit abgerundeten Ecken und eine auf diesen aufgebrachte Wicklung 2. Die Herstellung des Kerns 1 kann auf viele verschiedene Arten erfolgen und ist für die vorliegende Erfindung unbedeutend. Außerdem kann der Kern 1 mit einer umlaufenden, an einer Mantelfläche anliegenden Isolationsschicht 3 versehen sein, die aus einem z. B. aus Kunststoff hergestellten Isoliermaterial besteht und auch als Wicklungsträger ausgebildet sein kann, der Montageflansche 4 aufweist, zwischen denen die Wicklung 2 zu liegen kommt. Die Isolierschicht 3 dient somit sowohl zur Montage der Wicklung 2 als auch zur elektrischen Isolierung der Wicklung 2 gegen den Kern 1 in radialer Richtung, bezogen auf eine Mittel- und Wickelachse 5 des Kerns 1.

Die Wicklung 2 wird z. B. durch abwechselnd aufeinander folgende Lagen aus einem Leitungsband 6 (z. B. Aluminium) und zwischen diesen angeordneten Isolationsschichten 7 in Form einer Isolierfolie od. dgl. gebildet, die die Lagen in radialer Richtung elektrisch gegeneinander isolieren. Bei der Herstellung des Magnetpols werden die Leitungsbänder 6 und die Isolationsschichten 7 z. B. in bekannter Weise von Vorratsspulen 8, 9 abgewickelt und koaxial um die Mittelachse 5 auf den Kern 1 gewickelt. Die dadurch erhaltene Wicklung 2 besteht daher aus einer zur Mittelachse 5 koaxialen Scheibe, die in radialer Richtung eine Vielzahl von Lagen aufweist.

Magnetpole der beschriebenen Art für Magnetschwebefahrzeuge weisen z. B. bis zu 300 Lagen auf. Daher muß die beim Betrieb erzeugte Wärme, sofern sie in einer mittleren, z. B. in der 150. Lage der Wicklung 2 erzeugt wird, in radialer Richtung sowohl nach innen zum Kern 1 hin als auch radial nach außen jeweils eine Vielzahl von z. B. 150 Isolationsschichten durchdringen, die zur elektrischen Isolierung eine bestimmte Mindestdicke haben müssen. Die Wärmeabfuhr und damit die Kühlwirkung in radialer Richtung sind daher stark von der Zahl der vorhandenen Lagen 1 ... 300 abhängig.

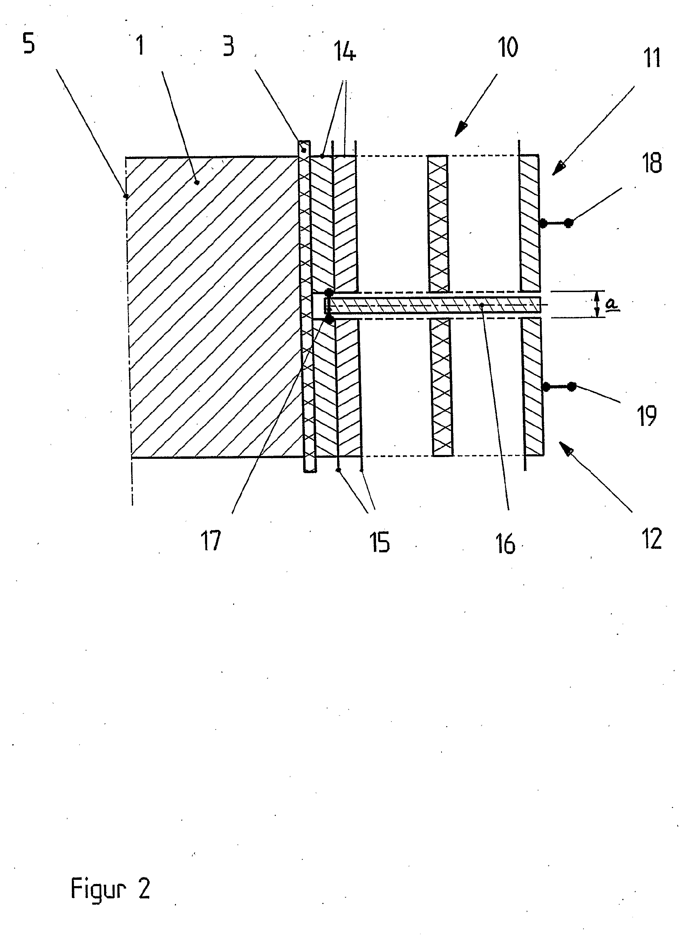

Erfindungsgemäß wird daher zunächst vorgeschlagen, die Lagen einer Wicklung 10 (Fig. 2) auf zwei in axialer Richtung übereinander liegende Scheiben 11 und 12 zu verteilen. Besonders vorteilhaft ist es, wenn beide Scheiben 11, 12 jeweils im wesentlichen dieselbe Anzahl von Lagen bzw. Wicklungen aufweisen. Dies ist in Fig. 2 dadurch realisiert, daß z. B. die Scheibe 11 die Lagen 1 bis 150 und die Scheibe 12 die Lagen 151 bis 300 aufweist, wobei die einzelnen Lagen durch das Bezugszeichen 14 und zwischen ihnen befindliche Isolationsschichten durch das Bezugszeichen 15 angedeutet sind. In magnetischer Hinsicht ergibt sich dadurch bei gleichem Strom dieselbe Durchflutung wie bei Anwendung einer einscheibigen Wicklung mit gleicher Windungszahl. Damit auch die für die Verlustleistung maßgeblichen Querschnittsflächen der einzelnen Lagen dieselben wie bei einer einscheibigen Wicklung 2 entsprechend Fig. 1 sind, ohne daß die in axialer Richtung gemessene Höhe des Magnetpols vergrößert werden muß, weisen die Lagen 14 in Fig. 2 die halbe Höhe und die doppelte Dicke im Vergleich zu Fig. 1 auf. Schließlich ist in Fig. 2 wenigstens eine zweite Isolierschicht 16 vorgesehen, die zwischen den beiden Scheiben 11, 12 angeordnet ist und diese in axialer Richtung elektrisch gegeneinander isoliert.

Die Lagen 14 werden in der einen Scheibe 11 vorzugsweise mit entgegengesetztem Wicklungssinn im Vergleich zur anderen Scheibe 12 um den Kern 1 gewickelt. Dadurch ist es möglich, die beiden innen am Kern 1 liegenden Lagen durch eine Verbindungsleitung 17 elektrisch miteinander zu verbinden und beide radial am weitesten außen liegende Lagen 14 mit je einem elektrischen Anschluß 18, 19 zu versehen, von denen der eine als Zuleitung und der andere als Ableitung für den die Wicklung 10 durchfließenden Strom dient, so daß die einzelnen Lagen 14 hintereinander vom Strom durchflossen werden, wenn zwischen den Anschlüssen 18, 19 die Klemmenspannung liegt.

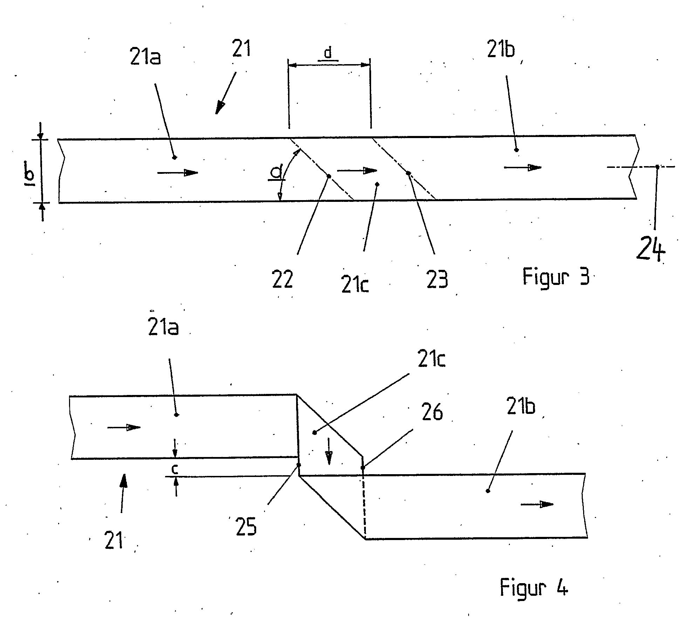

Zur Vereinfachung der Herstellung und Montage und zur Vermeidung von schädlichen Verdichtungen der elektrischen Feldstärke im Bereich der Verbindungsleitung 17 aufgrund von scharfen Ecken oder Kanten werden die beiden in den Scheiben 11 und 12 befindlichen Wicklungsabschnitte erfindungsgemäß aus einem Leitungsband 21 (Fig. 3, 4) gebildet, das zwei Leitungsbandabschnitte 21a und 21b und einen zwischen den beiden liegenden Verbindungsabschnitt 21c enthält, der diejenigen Enden der Leitungsbandab-schnitte 21a, 21b elektrisch leitend miteinander verbindet, die bei der Montage nahe am Kern 1 (Fig. 2) zu liegen kommen. Das Leitungsband 21 hat zweckmäßig über seine gesamte Länge dieselbe Breite **b.** Der Verbindungsabschnitt 21c besteht zweckmäßig aus demselben Material (z. B. Aluminium) wie jeder Leitungsbandabschnitt 21a bzw. 21b. Außerdem ist der Verbindungsabschnitt 21c so gestaltet, daß er sowohl einen Abstand **a** (Fig. 2) der beiden Scheiben 11, 12 im montierten Zustand als auch den Wicklungssinn der Leitungsabschnitte 21a, 21b in den Scheiben 11, 12 bei der Montage festlegt. Diese Festlegungen werden durch die nachfolgend beschriebene Faltung des Leitungsbandes 21 erhalten.

Gemäß Fig. 3 enthält das Leitungsband 21 zwei gedachte oder durch Einprägungen od. dgl. vorgegebene, in Fig. 3 gestrichelt angedeutete Faltlinien 22 und 23. Beide Faltlinien 22, 23 verlaufen unter einem Winkel *α*, der z. B. zwischen 30° und 60° liegt und vorzugsweise 45° beträgt, schräg zu einer Längsachse 24 des Leitungsbandes 21. Die beiden Faltlinien 22, 23 begrenzen gleichzeitig den Verbindungsabschnitt 21c des Leitungsbandes 21.

Das Leitungsband 21 wird vor der Montage gefaltet. Dazu wird z. B. zunächst der Verbindungsabschnitt 21c zusammen mit dem angrenzenden Leitungsbandabschnitt 21b um 180° um die Faltlinie 22 gefaltet, z. B. nach oben aus der Zeichenebene heraus. Dadurch kommt der Leitungsbandabschnitt 21b senkrecht zum Leitungsbandabschnitt 21a zu liegen, wobei jetzt im Gegensatz zu Fig. 3 seine Unterseite nach oben weist. In zweiten Schritt wird dann allein der Leitungsbandabschnitt 21b um 180° um die zweite Faltlinie 23 gefaltet, und zwar wiederum nach oben aus der Zeichenebene heraus. Danach nimmt der Leitungsbandabschnitt 21b die aus Fig. 4 ersichtliche Lage ein, in welcher die in Fig. 3 oben liegende Seite wiederum oben liegt. Gleichzeitig ist aus Fig. 4 erkennbar, daß die beiden Leitungsbandabschnitte 21a, 21b nach der Faltung zwar parallel zueinander liegen, dabei aber einen Abstand c voneinander aufweisen. Dieser Abstand ergibt sich bei einem Faltwinkel *α* von 45° aus der Differenz zwischen einem Abstand d der beiden Faltlinien 22, 23 parallel zur Längsachse 24 (Fig. 3) und der Breite b des Leitungsbandes 21. Je größer (kleiner) diese Differenz ist, um so größer (kleiner) ist der Abstand **c.** Dabei ist klar, daß das Maß **d** um so viel größer als das Maß **b** gewählt wird, das die Differenz **d -b** genau gleich dem in Fig. 2 mit **a** bezeichneten Abstand zwischen den beiden herzustellenden Scheiben 11, 12 ist. Bei Faltlinien, die mit von 45° abweichenden Faltwinkeln *α* geneigt sind, führen ähnliche Überlegungen zum erforderlichen Maß **a** in Fig. 2.

Beim Bewickeln des Kerns 1 wird der Verbindungsabschnitt 21c eines auf die erforderliche Länge abgelängten Leitungsbandes 21 mit seiner Ober- oder Unterseite auf die Mantelfläche des Kerns 1 bzw. der Isolationsschicht 3 gelegt. Anschließend wird der Leitungsbandabschnitt 21a in dem sich daraus ergebenden einen Winklungssinn und der Leitungsbandabschnitt 21b im entgegengesetzten Wicklungssinn um den Kern 1 gewickelt. Sowohl das Maß **c** als auch der Wicklungssinn ist dabei durch die Geometrie des Verbindungsabschnitts 21c fest vorgegeben. Die daraus resultierende Richtung eines z. B. über den Anschluß 18 (Fig. 2) zugeführten Stroms ist in Fig. 3 und 4 durch Pfeile angedeutet, wodurch ersichtlich ist, daß sich die vom Strom in den beiden Scheiben 11, 12 erzeugten magnetischen Durchflutungen addieren.

Beim Ausführungsbeispiel nach Fig. 3 und 4 könnte sich der Nachteil ergeben, daß unmittelbar am Kern 1 zu liegen kommende Seitenkanten 25, 26 des Verbindungsabschnitts 21c zu störenden Feldstärkeverdichtungen (Spitzenentladungen) Anlaß geben, da diese Seitenkanten 25, 26 nach der Montage frei zwischen den beiden Scheiben 11, 12 liegen und der Abstand **a** wegen der erforderlichen Scheiben-Isolationsschicht 16 (Fig. 2) nicht beliebig klein gemacht werden kann.

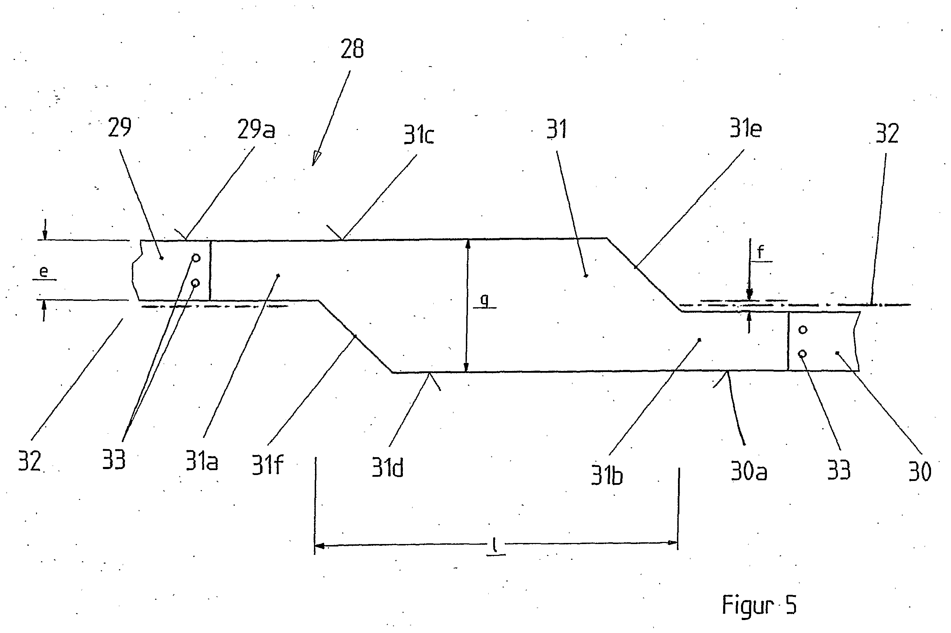

Dem aus Fig. 3 und 4 ersichtlichen Problem wird erfindungsgemäß mit dem Ausführungsbeispiel nach Fig. 5 bis 7 abgeholfen. Gemäß Fig. 5 enthält ein Leitungsband 28 analog zu Fig. 3 und 4 zwei Leitungsbandabschnitte 29, 30 und einen dazwischen liegenden Verbindungsabschnitt 31, der die beiden Leitungsbandabschnitte 29, 30 elektrisch miteinander verbindet und vorzugsweise aus demselben Material wie diese besteht. Im Gegensatz zu Fig. 3 und 4 werden die zur Herstellung der Wicklung 10 (Fig. 2) dienenden Leitungsbandabschnitte 29, 30 aus separaten Streifen hergestellt, die parallel zu einer Längsachse 32 durchgehend dieselbe Breite e haben. Der Verbindungsabschnitt 31 besteht aus einem ebenfalls separat hergestellten, z. B. durch Stanzen erhaltenen, flächigen Formteil, das zwei in Richtung der Längsachse 32 beabstandete Anschlußenden 31a, 31b aufweist, die durch Schweißen oder sonstwie, wie durch Punkte 33 angedeutet ist, fest mit den Leitungsbandabschnitten 29, 30 verbunden sind. Die Anschlußenden 31a, 31b weisen zweckmäßig ebenfalls die Breite **e** auf und sind senkrecht zur Längsachse um ein Maß **f** beabstandet, das dem Maß **a** in Fig. 2 entspricht. Zwischen den beiden Anschlußenden 31a, 31b besitzt der Verbindungsabschnitt zwei parallel zur Längsachse 32 verlaufende Längsränder 31c, 31d, die um ein Maß **g** beabstandet sind, das der Summe aus der doppelten Breite **e** und dem Maß **f** entspricht. Dabei geht der Längsrand 31c bündig in eine Außenkante des einen Anschlußendes 31a und eine Außenkante 29a des damit verbundenen Leitungsbandabschnitts 29 über, während der andere Längsrand 31d bündig in eine gegenüber liegende Außenkante des anderen Anschlußendes 31b und eine Außenkante 30a des mit diesen verbundenen Leitungsbandabschnitts 30 übergeht.

Die Montage des Leitungsbandes 28 nach Fig. 5 erfolgt analog zu der des Leitungsbandes 21 nach Fig. 3 und 4, wobei wegen des Formteils 31 allerdings der Faltvorgang entfallen kann. Nachdem der Verbindungsabschnitt 31, dessen Maß g im wesentlichen der Höhe des Kerns 1 entspricht, auf diesen aufgelegt ist, werden die Endabschnitte 31a, 31b und mit ihnen die Leitungsbandabschnitte 29, 30 in dem einen bzw. anderen Wicklungssinn um den Kern 1 gewickelt, wobei wiederum von einem fertig vorbereiteten und auf Länge geschnittenen Leitungsband 28 ausgegangen wird. Der Abstand a der dadurch gebildeten Scheiben 11, 12 (Fig. 2) entspricht dann automatisch dem Maß f, und auch er entgegengesetzte Wicklungssinn ist durch den -Verbindungsabschnitt 31 fest vorgegeben. Außerdem wird eine Länge l des Verbindungsabschnitts 31 zweckmäßig so gewählt, daß der Verbindungsabschnitt 31 die erste volle, unmittelbar auf dem Kern 1 bzw. die Isolationsschicht 3 gewickelte Lage bildet. Für diesen Fall stoßen Kanten 31e und 31f, die in den Übergangsbereichen zwischen den Anschlußenden 31a, 31b und dem die Breite g aufweisenden Mittelstück des Verbindungsabschnitts 31 liegen, nach der Montage vorzugsweise gegeneinander, bevorzugt mit einer geringfügigen, z. B. durch Schlitzung der einen Kante ermöglichten Überlappung. Dadurch fehlen die aus Fig. 4 ersichtlichen, frei liegenden Seitenkanten 25 und 26, und ein zwischen den beiden Scheiben 11, 12 bestehende Schlitz ist durch den Verbindungsabschnitt 31 zum Kern 1 hin vollständig abgedeckt.

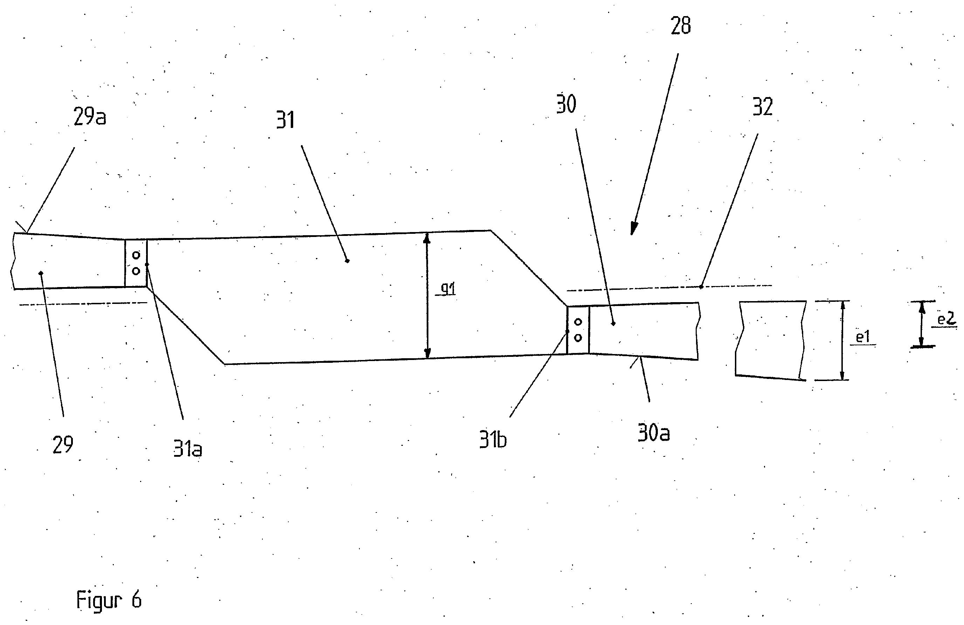

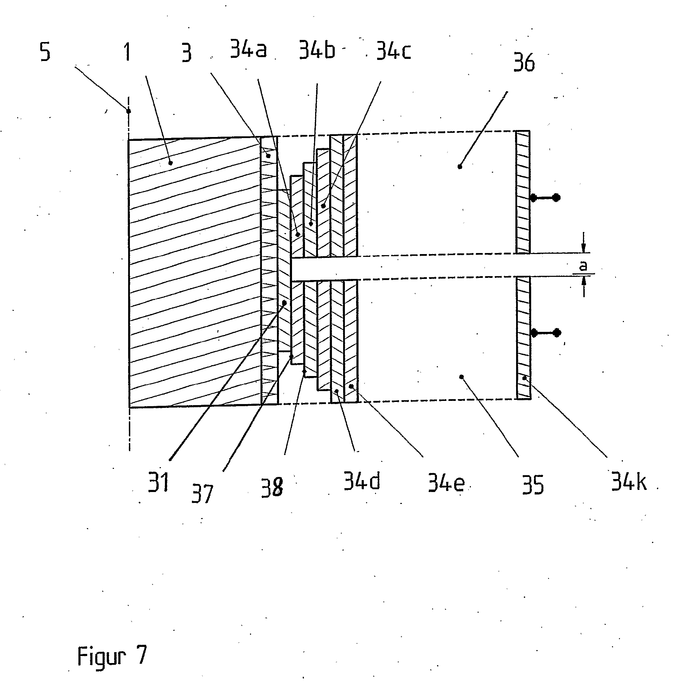

Eine weitere Verbesserung der Isolierungseigenschaften wird mit dem Ausführungsbeispiel nach Fig. 6 und 7 erzielt, das im wesentlichen dem Ausführungsbeispiel nach Fig. 5 entspricht. Im Unterschied dazu sind die Leitungsbandabschnitte 29, 30 so ausgebildet, daß ihre Außenkanten 29a, 30a in einem an den Verbindungsabschnitt 31 grenzenden Bereich schräg zur Längsachse 32 nach außen laufen. Zu diesem Zweck wird einerseits ein dem Maß g in Fig. 5 entsprechendes Maß g1 des Verbindungsabschnitts 31 etwas kleiner gewählt, als der Höhe des Kerns 1 entspricht. Andererseits werden die Leitungsbandabschnitte 29, 30 an den äußeren Längsrändern 29a, 30a zweckmäßig derart zugeschnitten, daß ihre Breite (Maß e in Fig. 5) vom Verbindungsabschnitt 31 aus in Längsrichtung (Achse 32) bis zu einem Höchstwert e1 (Fig. 6) stetig zunimmt, wobei diese Zunahme längs einer geraden oder gekrümmten Linie verlaufen kann. Dabei wird der Höchstwert e1, in Längsrichtung betrachtet, nach einer Länge erreicht, die einer Anzahl von Lagen entspricht, die kleiner als die Anzahl der insgesamt vorhandenen Lagen der zugehörigen Scheibe ist. Beispielsweise wird der Höchstwert e1 nach einer etwa zehn Lagen entsprechenden Länge des betreffenden Leitungsbandabschnitts 29, 30 erreicht. Dabei erfolgt das Zuschneiden der Längskanten 29a, 30a vorzugsweise symmetrisch zu der senkrecht zur Mittelachse 5 (Fig. 2) verlaufenden Längsachse 32, jedoch mit dem aus Fig. 6 ersichtlichen Versatz in Richtung der Achse 32. An ihrem mit den Anschlußenden 31a, 31b verbundenen Enden weisen die Leitungsbandabschnitte 29, 30 daher eine gegenüber dem Maß e1 entsprechend reduzierte Breite e2 auf (Fig. 6).

Das beschriebene Zuschneiden der Seitenränder 29a, 30a führt dazu, daß mit ihnen gebildete Lagen 34a, 34b ... 34k von zwei Wicklungen 35 und 36 gemäß Fig. 7, in der dazwischen liegende Isolationsschichten nicht dargestellt sind, eine allmählich zunehmende Höhe erhalten. Dabei wird die Steigung der Längskanten 29a, 30a mit besonderem Vorteil so gewählt, daß dem Kern 1 bei den ersten Lagen 34a, 34b ... jeweils nur eine Ecke bzw. scharfe Kante (z. B. 37, 38 in Fig. 7) zugewandt ist, die bereits von der nachfolgenden Lage flächig abgedeckt wird. So wird z. B. die Kante 37 der Lage 34a von der Lage 34b und die Kante 38 der Lage 34b von der Lage 34c abgedeckt usw., wodurch schädliche Spitzenentladungen weitgehend vermieden werden. Dies gilt insbesondere bei Berücksichtigung des Umstandes, daß die Leitungsbandabschnitte 29, 30 vergleichsweise dünn sind (z. B. 0,2 mm) und die Feldstärkeverdichtungen bei Kombinationen Platte/Spitze wenigstens etwa dreimal so groß wie bei einer Kombination Platte/Platte sind. Außerdem kann durch die beschriebene Ausbildung der Zuschnitte sichergestellt werden, daß die kleinste Breite e2 der Leitungsbandabschnitte 29, 30 dort, wo sie mit den Anschlußenden 31a, 31b verbunden sind, nur um soviel kleiner als die maximale Breite e1 ist, daß die damit verbundene Vergrößerung des ohmschen Widerstandes keine wesentlichen Nachteile im Hinblick auf die Abfuhr der Verlustwärme über den Kern 1 in radialer Richtung zu Folge hat.

Im übrigen zeigt Fig. 7, daß beim Ausführungsbeispiel die maximale Breite e1 der Leitungsbandabschnitte 29, 30 etwa bei der vierten Lage 34d erreicht wird.

Weitere Vorteile der Erfindung bestehen darin, daß durch Vermeidung von Isolationsdurchbrüchen eine höhere Betriebssicherheit, eine Reduzierung von Alterungseffekten und eine Vergrößerung der Nennwerte für Korona- und Teilentladungen erhalten werden. Dabei ist klar, daß die Geometrie der aus Fig. 6 und 7 ersichtlichen Abstufungen im Bereich der ersten Lagen 34a, 34b ... im Prinzip beliebig gewählt und weitgehend den magnetischen Bedürfnissen angepaßt werden kann. Weiter ist es möglich, zwischen der Isolationsschicht 3 des Kerns 1 und der ersten Lage 34a noch eine nicht dargestellte, über die Höhe des Kerns 1 durchgehende, teilleitfähige Folie vorzusehen, die z. B. aus einem mit Ruß versetzten, organischen Isolierstoff besteht und dazu geeignet ist, kapazitive Ströme abzuleiten, Betriebsströme dagegen nicht durchzulassen. Die Folie kann nach dem Bewickeln des Kerns 1 gegen die Kanten und Ecken 37, 38 (Fig. 7) usw. gelegt werden, um dadurch eine Abrundung und Vergleichmäßigung der abgestuften Bereiche in der Nähe des Kerns 1 zu erhalten und die Gefahr von Spitzentladungen weiter zu reduzieren.

Die Erfindung ist nicht auf die beschriebenen Ausführungsbeispiele beschränkt, die auf vielfache Weise abgewandelt werden können. Dies gilt insbesondere für die im Einzelfall gewählte Form der Faltung nach Fig. 3 und 4 bzw. die Ausbildung der Verbindungsabschnitte bzw. Formteile 31 nach Fig. 5 und 6. Weiter ist es möglich, den Magnetpol bei analoger Ausbildung aus vier, sechs oder mehr, in Richtung der Mittelachse 5 übereinander liegenden Scheiben auszubilden. Schließlich versteht sich, daß die verschiedenen Merkmale auch in anderen als den beschriebenen und dargestellten Kombinationen angewendet werden können.

## Patentansprüche

1. Magnetpol für Magnetschwebefahrzeuge mit einem eine Mittelachse (5) aufweisenden Kern (1) und einer auf den Kern (1) aufgebrachten Wicklung (10, 35, 36), wobei die Wicklung (10, 35, 36) zwei in Richtung der Mittelachse (5) beabstandete Scheiben (11, 12) enthält, wobei die Scheiben (11, 12) aus zwei in mehreren Lagen um Kern (1) gewickelten Leitungsbandabschnitten (21a, 21b) gebildet sind, **dadurch gekennzeichnet, dass** die Scheiben (11, 12) mit entgegengesetztem Wicklungssinn gebildet sind, wobei die Leitungsbandabschnitte (21a, 21b) an dem Kern (1) nahen Enden durch einen mittleren, den axialen Abstand (a) der beiden Scheiben (11, 12) und den Wicklungssinn der beiden Leitungsbandabschnitte (21a, 21b) festlegenden Verbindungsabschnitt (21c) elektrisch leitend miteinander verbunden sind und daß die Wicklung (10) aus einem durchgehenden, einstückigen Leitungsband (21) von im wesentlichen durchgehend gleicher Breite (b) hergestellt ist, wobei der axiale Abstand (a) der beiden Scheiben (11, 12) durch Faltung im Bereich des Verbindungsabschnitts (21c) festgelegt ist.

2. Magnetpol nach Anspruch 1, **dadurch gekennzeichnet, daß** das Leitungsband (21) längs zweier Faltlinien (22, 23) gefaltet ist, die parallel zueinander und schräg zu einer Längsachse (24) des Leitungsbandes (21) angeordnet sind.

3. Magnetpol für Magnetschwebefahrzeuge mit einem eine Mittelachse (5) aufweisenden Kern (1) und einer auf den Kern (1) aufgebrachten Wicklung (10, 35, 36), wobei die Wicklung (10, 35, 36) zwei in Richtung der Mittelachse (5) beabstandete Scheiben (11, 12) enthält, wobei die Scheiben (11, 12) aus zwei in mehreren Lagen um Kern (1) gewickelten Leitungsbandabschnitten (29, 30) gebildet sind, **dadurch gekennzeichnet, dass** die Scheiben (11, 12) mit entgegengesetztem Wicklungssinn gebildet sind, wobei die Leitungsbandabschnitte (29, 30) an dem Kern (1) nahen Enden durch einen mittleren, den axialen Abstand (a) der beiden Scheiben (11, 12) und den Wicklungssinn der beiden Leitungsbandabschnitte (29, 30) festlegenden Verbindungsabschnitt (31) elektrisch leitend miteinander verbunden sind und daß die Wicklung (35, 36) aus einem durchgehenden Leitungsband (28) hergestellt ist, bei dem der Verbindungsabschnitt (31) als flächiges Formteil ausgebildet ist, das zwei den axialen Abstand (a) der beiden Scheiben festlegende, mit je einem der Leitungsbandschnitte (29, 30) verbundene Anschlußenden (31a, 31b) aufweist.

4. Magnetpol nach Anspruch 3, **dadurch gekennzeichnet, daß** die beiden Leitungsbandabschnitte (29, 30) durch Schweißen mit dem Verbindungsabschnitt (31) verbunden sind.

5. Magnetpol nach einem der Ansprüche 1 bis 4, **dadurch gekennzeichnet, daß** wenigstens ein Leitungsbandabschnitt (29, 30) an einem äußeren Längsrand (29a, 30a) derart zugeschnitten ist, das seine Breite (e) vom Verbindungsabschnitt (31) aus in Längsrichtung bis zu einem Höchstwert (e1) stetig zunimmt.

6. Magnetpol nach Anspruch 5, **dadurch gekennzeichnet, daß** der Höchstwert (e1) der Breite, in Längsrichtung betrachtet, nach einer Länge erreicht ist, die einer Anzahl von Lagen (34) entspricht, die kleiner als die Anzahl der insgesamt vorhandenen Lagen (34) der zugehörigen Scheibe ist.

7. Magnetpol nach Anspruch 6, **dadurch gekennzeichnet, daß** der Höchstwert (e1) der Breite nach einer etwa zehn Lagen (34) entsprechenden Länge des Leitungsbandabschnitts (29, 30) erreicht ist.

8. Magnetpol nach einem der Ansprüche 5 bis 7, **dadurch gekennzeichnet, daß** die Längsränder (29a, 30a) der Leitungsbandabschnitte (29, 30) symmetrisch zu einer senkrecht zur Mittelachse (5) erstreckten Längsachse (32) des Leitungsbandes (28), jedoch mit einem durch den Verbindungsabschnitt (31) gebildeten Versatz zugeschnitten sind.

9. Magnetpol nach einem der Ansprüche 5 bis 8, **dadurch gekennzeichnet, daß** die Längsränder (29a, 30a) längs Geraden oder stetiger Kurven zugeschnitten sind.

10. Magnetpol nach einem der Ansprüche 3 bis 9, **dadurch gekennzeichnet, daß** der Verbindungsabschnitt (31) so ausgebildet ist, das er die erste, um den Kern (1) gewickelte Lage der beiden Scheiben bildet und einen durch den Abstand (a) der beiden Scheiben gebildeten Schlitz abdeckt.

11. Magnetpol nach einem der Ansprüche 1 bis 10, **dadurch gekennzeichnet, daß** der Kern (1) an seiner Mantelfläche mit einer Isolationsschicht (3) umwickelt und zwischen der Isolationsschicht (3) und der an diese grenzenden Lage (14, 34a) der Scheibe (11, 12) eine teilleitfähige Folie angeordnet ist, die an durch das Zuschneiden des Leitungsbandes (21, 28) gebildeten Stufen anliegt.

## Claims

1. A magnetic pole for magnetic levitation vehicles with a core (1) comprising a central axis (5) and a winding (10, 35, 36) applied to the core (1), wherein the winding (10, 35, 36) contains two discs (11, 12) spaced apart in direction of the central axis (5), wherein the discs (11, 12) are formed from two conduction band sections (21a, 21b) wound around the core (1) in several layers, **characterised in that** the discs (11, 12) are formed with an opposite winding sense, wherein the conduction band sections (21a, 21b), at the ends proximate to the core (1), are electroconductively connected to each other by a central connecting section (21c) determining the axial distance (a) of the two discs (11, 12) and the winding sense of the two conduction band sections (21a, 21b), and **in that** the winding (10) is made from a continuous, one-piece conduction band (21) of essentially continuously the same width (b), wherein the axial distance (a) of the two discs (11, 12) is determined by folding in the area of the connecting section (21c).

2. The magnetic pole according to claim 1, **characterised in that** the conduction band (21) is folded along two fold lines (22, 23) arranged in parallel to each other and obliquely to a longitudinal axis (24) of the conduction band (21).

3. A magnetic pole for magnetic levitation vehicles with a core (1) comprising a central axis (5) and a winding (10, 35, 36) applied to the core (1), wherein the winding (10, 35, 36) contains two discs (11, 12) spaced apart in direction of the central axis (5), wherein the discs (11, 12) are formed from two conduction band sections (21a, 21b) wound around the core (1) in several layers, **characterised in that** the discs (11, 12) are formed with an opposite winding sense, wherein the conduction band sections (29, 30), at the ends proximate to the core (1), are electroconductively connected to each other by a central connecting section (31) determining the axial distance (a) of the two discs (11, 12) and the winding sense of the two conduction band sections (29, 30), and **in that** the winding (35, 36) is made from a continuous, conduction band (28), where the connecting section (31) is formed as a flat moulded part which comprises two connecting ends (31, 31b) connected to respectively one of the conduction band sections (29, 30) and determining the axial distance (a) of the two discs.

4. The magnetic pol according to claim 3, **characterised in that** the two conduction band sections (29, 30) are connected by welding to the connecting section (31).

5. The magnetic pol according to one of claims 1 to 4, **characterised in that** at least one conduction band section (29, 30) is tailored at an outer longitudinal edge (29a, 30a) such that its width (e) constantly increases starting from the connecting section (31) in longitudinal direction up to a maximum value (e1).

6. The magnetic pol according to claim 5, **characterised in that** the maximum value (e1) of the width, viewed in longitudinal direction, is achieved after a length which corresponds to a number of layers (34), which is smaller than the total number of existing layers (34) of the associated disc.

7. The magnetic pol according to claim 6, **characterised in that** the maximum value (e1) of the width is achieved after a conduction band section (29, 30) length corresponding to approx. ten layers (34).

8. The magnetic pol according to one of claims 5 to 7, **characterised in that** the longitudinal edges (29a, 30a) of the conduction band sections (29, 30) are tailored symmetrically to a longitudinal axis (32) of the conduction band (28) which extends at right angles to the central axis (5), but with an offset formed by the connecting section (31).

9. The magnetic pol according to one of claims 5 to 8, **characterised in that** the longitudinal edges (29a, 30a) are tailored along straights or continuous curves.

10. The magnetic pol according to one of claims 3 to 9, **characterised in that** the connecting section (31) is configured such that it forms the first layer of the two discs, which is wound around the core (1), and covers a slit formed by the distance (a) between the two discs.

11. The magnetic pol according to one of claims 1 to 10, **characterised in that** the core (1) has an insulating layer (3) wrapped around its outside surface and **in that** a partially conductive film is arranged between the insulating layer (3) and the adjacent layer (14, 34a) of the disc (11, 12), which film is in contact with steps formed by the tailoring of the conduction band (21, 28).

## Revendications

1. Pôle magnétique pour véhicules à sustentation magnétique avec un noyau (1) présentant un axe médian (5) et un enroulement (10, 35, 36) appliqué sur le noyau (1), dans lequel l'enroulement (10, 35, 36) contient deux disques (11, 12) espacés en direction de l'axe médian (5), dans lequel les disques (11, 12) sont formés par deux tronçons de ruban conducteur (21a, 21b) enroulés en plusieurs couches autour du noyau (1), **caractérisé en ce que** les disques (11, 12) sont formés avec un sens d'enroulement contraire, dans lequel les tronçons de ruban conducteur (21a, 21b) sont reliés de manière électroconductrice l'un à l'autre, au niveau des extrémités proches du noyau (1), par un tronçon de liaison médian (21c) déterminant l'écartement axial (a) des deux disques (11, 12) et le sens d'enroulement des deux tronçons de ruban conducteur (21a, 21b), et que l'enroulement (10) est produit à partir d'un ruban conducteur (21) continu d'une seule pièce d'une largeur (b) continue sensiblement égale, dans lequel l'écartement axial (a) des deux disques (11, 12) est déterminé par pliage dans la zone du tronçon de liaison (21c).

2. Pôle magnétique selon la revendication 1, **caractérisé en ce que** le ruban conducteur (21) est plié le long de deux lignes de pliage (22, 23) qui sont disposées parallèlement entre elles et en biais par rapport à un axe longitudinal (24) du ruban conducteur (21).

3. Pôle magnétique pour véhicules à sustentation magnétique avec un noyau (1) présentant un axe médian (5) et un enroulement (10, 35, 36) appliqué sur le noyau (1), dans lequel l'enroulement (10, 35, 36) contient deux disques (11, 12) espacés en direction de l'axe médian (5), dans lequel les disques (11, 12) sont formés par deux tronçons de ruban conducteur (29, 30) enroulés en plusieurs couches autour du noyau (1), **caractérisé en ce que** les disques (11, 12) sont formés avec un sens d'enroulement contraire, dans lequel les tronçons de ruban conducteur (29, 30) sont reliés de manière électroconductrice l'un à l'autre au niveau des extrémités proches du noyau (1) par un tronçon de liaison médian (31) déterminant l'écartement axial (a) des deux disques (11, 12) et le sens d'enroulement des deux tronçons de ruban conducteur (29, 30), et que l'enroulement (35, 36) est produit à partir d'un ruban conducteur continu (28) où le tronçon de liaison (31) est réalisé en tant pièce usinée plane qui présente deux extrémités de liaison (31a, 31b), déterminant l'écartement axial (a) des deux disques, reliées respectivement à l'un des tronçons de ruban conducteur (29, 30).

4. Pôle magnétique selon la revendication 3, **caractérisé en ce que** les deux tronçons de ruban conducteur (29, 30) sont reliés par soudage au tronçon de liaison (31).

5. Pôle magnétique selon l'une des revendications 1 à 4, **caractérisé en ce qu'**au moins un tronçon de ruban conducteur (29, 30) est découpé au niveau d'un bord longitudinal extérieur (29a, 30a) d'une façon telle, que sa largeur (e) augmente régulièrement à partir du tronçon de liaison (31) en direction longitudinale jusqu'à une valeur maximale (e1).

6. Pôle magnétique selon la revendication 5, **caractérisé en ce que** la valeur maximale (e1) de la largeur, en vue en direction longitudinale, est atteinte après une longueur qui correspond à un certain nombre de couches (34), lequel est inférieur au nombre de couches (34) présentes globalement du disque associé.

7. Pôle magnétique selon la revendication 6, **caractérisé en ce que** la valeur maximale (e1) de la largeur est atteinte après une longueur du tronçon de ruban conducteur (29, 30) correspondant à environ dix couches (34).

8. Pôle magnétique selon l'une des revendications 5 à 7, **caractérisé en ce que** les bords longitudinaux (29a, 30a) des tronçons de ruban conducteur (29, 30) sont découpés de manière symétrique à un axe longitudinal (32), s'étendant perpendiculairement à l'axe médian (5), du ruban conducteur (28), mais avec cependant avec un décalage formé par le tronçon de liaison (31).

9. Pôle magnétique selon l'une des revendications 5 à 8, **caractérisé en ce que** les bords longitudinaux (29a, 30a) sont découpés le long de droites ou de courbes régulières.

10. Pôle magnétique selon l'une des revendications 3 à 9, **caractérisé en ce que** le tronçon de liaison (31) est réalisé d'une façon telle, qu'il forme la première couche enroulée autour du noyau (1) des deux disques et recouvre une fente formée par l'écartement (a) entre les deux disques.

11. Pôle magnétique selon l'une des revendications 1 à 10, **caractérisé en ce que** le noyau (1) est enrobé avec une couche d'isolation (3) au niveau de sa surface enveloppante et qu'un film partiellement conducteur est disposé entre la couche d'isolation (3) et la couche (14, 34a) adjacente à celle-ci du disque (11, 12), lequel film repose contre des gradins formés par le découpage du ruban conducteur (21, 28).
